# EUROPEAN PATENT SPECIFICATION

(11) **EP 1 620 654 B1**
(45) Date of publication and mention of the grant of the patent: **03.12.2008**
(21) Application number: 04730847.3
(22) Date of filing: 03.05.2004
(51) Int. Cl.: F16C 3/02

(54) **Fibre composite propeller shaft**
Antriebswelle aus Faserverbund
Arbre de transmission composite en fibres

(30) Priority: 02.05.2003 GB 0310121
(43) Date of publication of application: 01.02.2006
(73) Proprietor: Spinning Composites Limited, Shropshire WV16 4LZ (GB)
(72) Inventor: POLLARD, Andrew, Shropshire WV16 4LZ (GB)
(74) Representative: Moldenhauer, Herbert
(86) International application number: PCT/EP2004/004633
(87) International publication number: WO 2004/097233

(56) References cited:
- EP-A- 0 877 173
- GB-A- 2 141 722
- US-A- 4 275 122
- US-B1- 6 464 591

## Description

### Technical Field

The invention relates to a composite propeller shaft comprising a composite fibre tubular section having or adapted to have at least one end attachment connected thereto for torque transmission with the shaft, wherein at least some of the fibres of the composite tubular section aligned, or substantially aligned with the longitudinal axis thereof are interrupted by removing a portion thereof near at least one end attachment so as to achieve a desired collapse behavior of the composite propeller shaft during a vehicle crash.

A propeller shaft for a motor vehicle, which serves to transmit torque generated in the engine to driving wheels, is typically required to have a torsional strength of approximately 1000Nm to 5000Nm. Furthermore, it is also required to have a critical speed of approximately 5,000 to 15,000 rpm in order that resonance may be avoided during high-speed rotation. When the main tubular body of the shaft is made of fibre composite material, these fundamental requirements are satisfied by adjusting various parameters, such as the kind, quantity and orientation of reinforcing fibres, the layered structure, the outer and inner diameters, and the wall thickness.

For example, in determining the orientation of the reinforcing fibres the following must be borne in mind:
- from the viewpoint of torsional strength, the reinforcing fibres are most effectively arranged at an angle of +/-45⁰ with respect to the longitudinal axis of the main body,
- from the viewpoint of torsional buckling strength, the most effective angle of arrangement for the reinforcing fibres is +/-80⁰ to 90° with respect to the longitudinal axis of the main body, and
- from the viewpoint of critical speed, the reinforcing fibres are to be arranged in a direction as parallel as possible to the longitudinal axis of the main body in order to achieve an increase in bending elasticity modulus to thereby obtain a high bending resonance frequency.

Thus, the most effective orientation for the reinforcing fibres depends upon the fundamental requirement to be taken into consideration, such as torsional strength or critical speed, which means the layer structure has to be determined by appropriately combining fibre orientations that are most suitable from the viewpoint of the actual requirements. The torsional strength can also be dealt with in terms of dimensions, such as outer diameter and wall thickness. Hence, when designing a propeller shaft, first priority is usually given to the critical speed, which greatly depends upon the orientation of the reinforcing fibres, and the proportion of those layers in which the reinforcing fibres are arranged at a small angle with respect to the longitudinal axis of the main body is made relatively large. This, however, leads to a conflict with design requirements to achieve a desired behaviour of the composite shaft during a vehicle crash.

The assurance of safety for the passengers when a collision occurs is an issue no less important than weight reduction. The prevailing present-day idea in automobile design regarding safety assurance consists of a crushable body structure, in which the impact energy (compressive load) at the time of collision is absorbed by the compressive destruction of the body, thereby mitigating the rapid acceleration applied to the passengers.

### State of Art

A propeller shaft generally of he type desribed in the preamble is described in US6465491B1. This discloses a tubular shaft that consists in its central area of a fibre reinforced plastic material and which is interleaved near its ends with metallic material that can be welded to the metallic end attachments. Such propeller shaft does not have satisfactory behaviour during the conditions of a vehicle crash.

With modern motor vehicles, the deformation behaviour in the case of a frontal collision is predetermined by design measures in such a way that certain progressive characteristic deformation curves (deformation force as a function of the deformation travel) have to be achieved. The required behaviour for the whole vehicle can be rationalised into requirements for individual systems and components. The central target of crash-optimised propeller shafts is adherence to a defined behaviour with respect to the maximum occurring axial force, force/displacement characteristic and, as a consequence, the energy to be absorbed by the shaft. ("The propshaft as an active part in the power train during vehicle crash", J. Trommer, 4th International Conference Vehicle & Traffic Systems, June 1993, Volume 1, pp243 - 263).

Where a composite propeller shaft has been designed to meet a particular requirement for critical speed, it has been explained that the proportion of those layers in which the reinforcing fibres are arranged at a small angle with respect to the axis of the shaft is made relatively large. At the same time there must also be sufficient fibres oriented at sufficient angle to support the transmission of torque. One consequence is that under a compressive axial load the composite shaft functions effectively as a rigid strut and so directly transmits the force impulse without useful energy dissipation.

In order to achieve the desired force/displacement characteristic US patent Nos. 5320579 and 6190263 describe means for making the attaching elements at the ends of the composite shaft slide therewithin, when a predetermined axial force is exceeded.

In US patent No. 5320579 the end attachment parts are made with a toothed form in the circumferential direction and are smooth in the longitudinal direction. When sufficient axial displacement is imposed, the dimensions of the parts are chosen so that energy is dissipated by friction at the sliding interface. The deficiency of this device is the complexity of the form and material properties required in the attaching region to ensure adequate endurance against torsional loading under all operating conditions.

In US patent No. 6190263 a sub-layer of hoop-wound fibres is interposed between the end attachment part and the main tube construction. When an axial force is imposed, a shear fracture develops between the sub-layer and the main body of the tube. The tube then slides over the end attachment part as it undergoes progressive fracture and energy absorption. The deficiency of this device is that when the end connection is made in such a way that there is adequate endurance against torsional loading under all operating conditions, the axial force impulse required to initiate failure is still relatively high. For example, a composite tube of typical dimensions used for an automotive propeller shaft might be expected to sustain an ultimate load of 300KN in the axial direction. The device disclosed in US patent No. 6190263 is shown to commence fracture at a load of approximately 100KN, before continuing progressive fracture at approximately 30KN. For many vehicle manufacturers, the desired characteristic is a sustained and constant force/displacement characteristic with initial peak below 50KN.

In US patent Nos. 6190263 and 5320579 it is not possible to make use of a composite tube manufactured by a continuous process, which is advantageous in terms of manufacturing cost, because of the special shape and construction features needed at the ends of the tube. Furthermore, the energy absorption characteristic is compromised in cases where the end attachment parts are of substantially larger diameter than the composite tube itself.

### Dislosure of the Invention

It is an object of the present invention to provide a new crash-optimised propeller shaft of better behaviour, when a motor vehicle undergoes a crash, that reliably causes rupture of the propeller shaft to occur in a composite tubular section of the propeller shaft without necessarily causing the end attachment parts to detach from the composite tubular section. This has the important benefit of allowing the connection between composite tubular section and the end attachments to be designed for maximum endurance against torsional loading without requiring any kind of weakness to initiate failure under axial loads.

According to an aspect of the invention there is provided a composite propeller shaft comprising a composite fibre tubular section having or adapted to have at least one end attachment connected thereto for torque transmission with the shaft wherein at least some of the fibres of the composite tubular section aligned, or substantially aligned with the longitudinal axis thereof are interrupted by removal thereof, the removed portion may be provided by
a) machining a circumferential groove (6, 12) or
b) a circumferential region of the composite tubular section (13) which is devoid of the fibres which are aligned or substantially aligned with the longitudinal axis thereof such fibres are replaced in such region by fibres oriented at an angle greater than +/- 15° to the longitudinal axis of the shaft.

The fibres of the composite tubular section aligned, or substantially aligned with the longitudinal axis of the shaft may be those aligned at an angle of less than +/-15° to such axis.

Depending on the desired characteristic of the propeller shaft, i.e. desired force/displacement, it may not be necessary to interrupt the whole of the thickness of aligned or substantially aligned fibres, but preferably at least 50% of the thickness should be interrupted.

To limit consequential reductions on the critical speed of the propeller shaft the interrupted region may be located at or near the at least one end attachment.

The interrupted region of the fibres may be provided by a region of the composite tubular section which is devoid of the fibres.

So that the critical speed of the shaft is not significantly reduced, the interrupted region of the fibres may be relatively short.

Preferably the length of the interrupted region should be greater than or equal to the wall thickness of the tubular section of the shaft.

### Brief Description of the Drawings

The invention will now be described by way of examples with reference to the accompanying drawings, in which:
FIG. 1 is a perspective view of an automotive composite propeller shaft, showing a widely used form of metallic end attachment fixed to the inside of a fibre composite tubular section of layered construction,
FIG. 2 is a cross-sectional side view of a first embodiment of the present invention,
FIG. 3 is a cross-sectional side view of FIG.1, showing rupture in the propeller shaft under an axial load,
FIG. 4 is a force/travel diagram showing energy absorption curves for the present invention and other arrangements,
FIG. 5 is a cross-sectional view of a region of the shaft near the metallic attachment end of a first embodiment of the invention,
FIG. 6 is a cross-sectional view of a region of the shaft near the metallic attachment end of a second embodiment of the invention,
FIG. 7 is a cross-sectional view of a region of the shaft near the metallic attachment end of a third embodiment of the invention
FIG. 8 is a cross-sectional view of a region of the shaft near the metallic attachment end of a fourth embodiment of the invention,

### Detailed description of the drawings

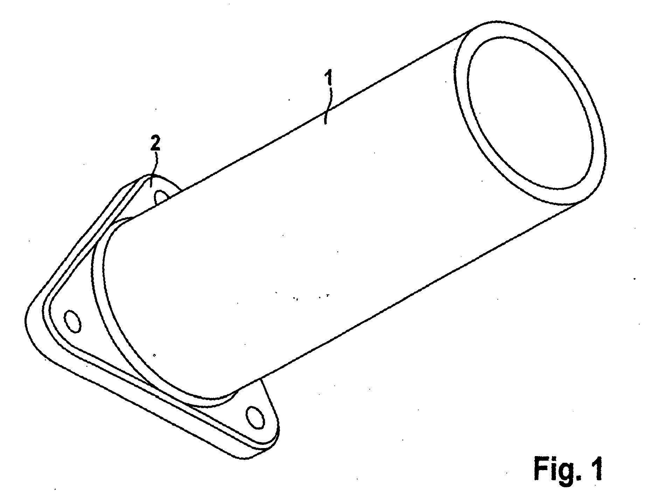

Referring to FIG. 1 there is shown an end part of a tubular composite propeller shaft 1 of circular cross-section with a typical type of metallic end attachment 2 connected thereto. Means for securing the end attachment 2 to the composite tubular shaft 1 has no effect on the present invention and therefore the particular form of the connection used in the figures is chosen only for purposes of Illustration.

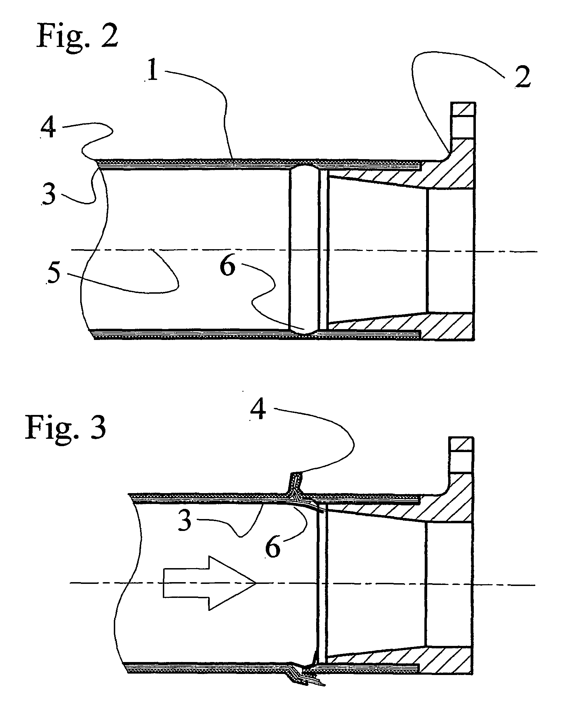

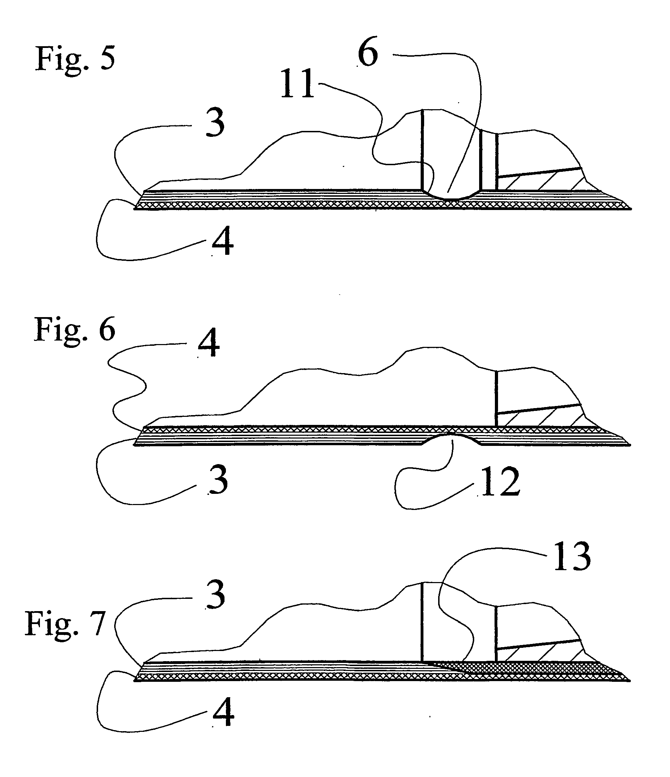

FIG. 2 shows a cross-sectional side view of a first embodiment of the invention. The composite shaft 1 has a longitudinal axis 5 and is constructed from two layers, namely a first layer 3 constructed from fibres aligned or substantially aligned with the longitudinal axis 5 and a second layer 4 constructed from fibres arranged at +/- θ° to the longitudinal axis (where θ° is typically greater than 20°), which provide support strength for torsional moment. A region of the fibres which are aligned or substantially aligned with the longitudinal axis 5 has at least some of its fibres interrupted by removing a portion thereof by machining of a circumferential groove 6 (see FIG.5).

The consequence of application of axial displacement to the system is illustrated in FIG. 3. In the presence of an axial displacement (as indicated by the "arrow"), the second layer 4 swells in the region of the groove 6 and hence fractures. After fracture has initiated, there is subsequently continued and progressive fracture of both the first layer 3 and second layer 4 as axial displacement continues.

The common feature of all embodiments described herein is that a portion of the fibres which are aligned or substantially aligned with the longitudinal axis 5 are interrupted by removal thereof, which leads to fracture of the tube where the fibres have been removed when an axial displacement is applied to the shaft.

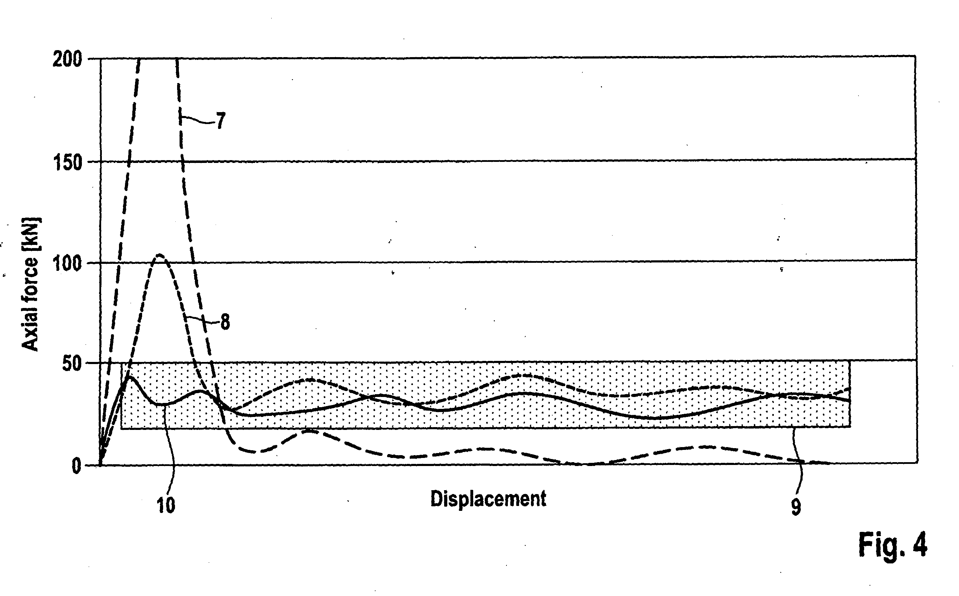

FIG. 4 illustrates force/travel relationships for the present invention and other existing arrangements. Where there is no crash feature of any kind, the characteristic behaviour is a high and short duration force Impulse 7 and subsequently very low force resulting in minimal energy absorption. Where there is a crash feature of the type where the end part is made to slide in the composite tube, e.g. As shown in US patent No. 6190263, the characteristic behaviour is a short duration force Impulse 8 with subsequent moderate force resulting in good energy absorption. However, the initial force impulse 8 can exceed the acceptable range 9 demanded by a typical automotive manufacturer. The present invention has been shown to diminish the initial force impulse to a level indicated at 10 so that the response of the System is, at all times, within the characteristics desired by a typical automotive manufacturer.

Figures 6, 7 and 8 show further embodiments of the present invention in which the fibres 3 which are aligned or substantially aligned with the longitudinal axis 5, are interrupted in different ways.

FIG. 6 illustrates an alternative embodiment suitable for cases where the first layer 3 of fibres is positioned as the outer layer and the second layer 4 of fibres is positioned as the inner layer. The machined groove 12 is provided around the outer circumference so as to cause the desired Interruption in substantially aligned fibres 3.

In order to retain sufficient strength in the composite tube, and in order to modify the axial force at which collapse initiates, it may be desirable to replace some of the removed material by other material, normally of angled fibre construction.

FIG. 7 illustrates an embodiment of this type, where a section of composite 13 with fibres arranged at +/- θ° to the longitudinal axis is inserted and bonded to replace the removed substantially aligned material.

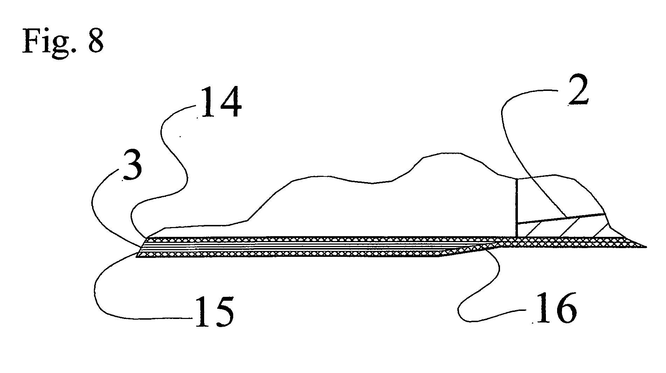

FIG. 8 shows a fourth embodiment of the present invention where the interruption in the substantially aligned fibres is introduced as part of a special manufacturing process. In this case, the composite tubular section is produced with angled fibres at both the external 15 and internal 14 surfaces. The substantially aligned fibres are terminated at 16, adjacent the attachment end 2. When axial displacement is imposed, the tube will swell and burst in the region 16 in a similar way to that illustrated in FIG. 3.

It must be appreciated that the Interruption of the fibres aligned or substantially aligned with the longitudinal axis 5 of the shaft may be achieved in a number of diverse ways, so long as they provide a region at which fracture initiates in the presence of an axial displacement.

In the present specification "comprises" means "includes or consists of and "comprising" means "including or consisting of.

## Claims

1. A composite propeller shaft (1) comprising a composite fibre tubular section having or adapted to have at least one end attachment (2) connected thereto for torque transmission with the shaft (1), wherein at least some of the fibres of the composite tubular section aligned, or substantially aligned with the longitudinal axis thereof are interrupted by removing a portion thereof near at least one end attachment (2), **characterised in that** the removed portion may be provided by
a) machining a circumferential groove (6, 12) or
b) circumferential region of the composite tubular section (13) which is devoid of the fibres which are aligned or substantially aligned with the longitudinal axis thereof such fibres are replaced in such region by fibres oriented at an angle greater than +/- 15° to the longitudinal axis of the shaft

2. A shaft according to claim 1, wherein the fibres of the composite tubular section aligned (13), or substantially aligned with the longitudinal axis (5) of the shaft (1) are those aligned at an angle of less than +/-15°.

3. A shaft according to claim 1 or claim 2 wherein at least 50% of the aligned or substantially aligned fibres are interrupted.

4. A shaft according to any preceding claim wherein the interrupted region is short relative to the length of the shaft.

5. A shaft according to any preceding claim wherein the length of the interrupted region is greater than or equal to the wall thickness of the tubular section.

## Patentansprüche

1. Antriebswelle (1) umfassend einen Rohrabschnitt aus einem Faserverbundwerkstoff, der an wenigstens einem Ende mit einem Endstück (2) versehen oder daran angepasst ist, das für eine Übertragung von Drehmomenten mit Hilfe der Antriebswelle (1) bestimmt ist, wobei wenigstens einige der Fasern des Faserverbundwerkstoffs, die unmittelbar oder überwiegend in Richtung der Längsachse Rohrabschnitts ausgerichtet sind, unterbrochen sind durch Entfernung eines Abschnittes des Rohrabschnites in der Nähe von wenigstens einem Endstück (2), **dadurch gekennzeichnet, dass** der entfernte Abschnitt erhalten ist durch
a) spanabhebende Einarbeitung einer Nut (6, 12) oder
b) einen umlaufenden Abschnitt des Rohrabschnittes (13), der frei von Fasern ist, die sich unmittelbar oder überwiegend in Richtung der Längsachse der Antriebswelle erstrecken, wobei die Fasern in dem Abschnitt ersetzt sind durch solche, die insgesamt oder überwiegend mit der Richtung der Längsachse der Antriebswelle (1) einen Winkel von mehr als +/- 15° einschließen.

2. Antriebswelle nach Anspruch 1, **dadurch gekennzeichnet, dass** die in dem Rohrabschnitt (13) enthaltenen, insgesamt oder überwiegend in Richtung der Längsachse der Antriebswelle (1) ausgerichteten Fasern mit der Längsachse einen Winkel von weniger als +/- 15° einschließen.

3. Antriebswelle nach Anspruch 1 oder 2, **dadurch gekennzeichnet, dass** wenigstens 50% der unmittelbar oder überwiegend in Richtung der Längsachse Rohrabschnitts ausgerichteten Fasern unterbrochen sind.

4. Antriebswelle nach einem der Ansprüche 1 bis 3, **dadurch gekennzeichnet, dass** der unterbrochene Abschnitt, bezogen auf die Länge des Rohrabschnitts, kurz ist.

5. Antriebswelle nach einem der Ansprüche 1 bis 4, **dadurch gekennzeichnet, dass** die Länge des unterbrochenen Abschnittes größer oder genauso groß ist wie die Wandstärke des Rohrabschnittes.

## Revendications

1. Arbre de transmission composite (1) comprenant une section tubulaire composite en fibres ayant ou adaptée pour avoir au moins une fixation d'extrémité (2) raccordée à celui-ci pour une transmission de couple avec l'arbre (1), dans lequel au moins certaines des fibres de la section tubulaire composite alignées, ou substantiellement alignées avec l'axe longitudinal de celui-ci sont interrompues en enlevant une partie de celles-ci à proximité d'au moins une fixation d'extrémité (2), **caractérisé en ce que** la partie enlevée peut être prévue par
a) un usinage d'une gorge circonférentielle (6, 12) ou
b) une région circonférentielle de la section tubulaire composite (13) qui est dépourvue des fibres qui sont alignées ou substantiellement alignées avec l'axe longitudinal de celui-ci de telles fibres sont remplacées dans une telle région par des fibres orientées selon un angle supérieur à ± 15° par rapport à l'axe longitudinal de l'arbre.

2. Arbre selon la revendication 1, dans lequel les fibres de la section tubulaire composite (13) alignées ou substantiellement alignées avec l'axe longitudinal (5) de l'arbre (1) sont celles alignées selon un angle inférieur à ± 15°.

3. Arbre selon la revendication 1 ou la revendication 2 dans lequel au moins 50% des fibres alignées ou substantiellement alignées sont interrompues.

4. Arbre selon l'une quelconque des revendications précédentes dans lequel la région interrompue est courte par rapport à la longueur de l'arbre.

5. Arbre selon l'une quelconque des revendications précédentes dans lequel la longueur de la région interrompue est supérieure ou égale à l'épaisseur de paroi de la section tubulaire.
